# EUROPEAN PATENT SPECIFICATION

(11) **EP 3 364 027 B1**
(45) Date of publication and mention of the grant of the patent: **27.11.2019**
(21) Application number: 17156823.1
(22) Date of filing: 20.02.2017
(51) Int. Cl.: F04B 15/02, F04B 47/00, F04B 53/20

(54) **DRAINAGE PUMP ASSEMBLY**
DRAINAGEPUMPENVORRICHTUNG
POMPE DE DRAINAGE

(43) Date of publication of application: 22.08.2018
(73) Proprietor: Xylem Europe GmbH, 8200 Schaffhausen (CH)
(72) Inventor: HÖRLÉN, Per, 12135 Enskededalen (SE); NORDFORS, Gunnar, 112 53 STOCKHOLM (SE); GÖRAS, Anders, 18270 Stocksund (SE); WIKSTRÖM, Jan, 174 41 Sundbyberg (SE)
(74) Representative: Brann AB

(56) References cited:
- WO-A2-2009/118618
- US-A- 3 963 073
- US-A1- 2016 288 021

## Description

### Technical field of the Invention

The present invention relates generally to the field of pumps configured to pump liquid comprising solid matter. Further, the present invention relates specifically to the field of drainage pump assemblies especially configured for pumping liquid comprising sand and stone material, such as drilling water in mining applications or surface water on construction sites. The drainage pump assembly comprises a drainage pump and an outlet conduit connected to said drainage pump, the drainage pump comprising a pump chamber.

### Background of the Invention

In mines, on construction sites, and the like applications, there is almost always a need to remove water in order to secure a dry enough environment at the working site. In mining applications a lot of drilling water is used when preparing for charging before blasting and if the drilling water is not removed at least the lower parts of the mine will become flooded. It is customary to use drainage pumps to lift the water out of the mine, and the water is lifted stepwise from the lower parts of the mine to different basins located at different depths of the mine. Each step/lift may for instance be in the range 25-50 meters in the vertical direction, and the length of the outlet conduit, i.e. the transport distance, in each step/lift may for instance be in the range 100-300 meters.

In mining applications a considerable amount of sand and stone material is suspended in the water, in some applications as much as 10%, and this cause considerable wear on the drainage pumps.

In many applications the drainage pumps are in constant operation, irrespective of water being pumped or not. Constant operation of the drainage pump may damage the drainage pump and result in excessive energy consumption. In some applications, the drainage pump is therefore stopped when the water level in the specific basin housing the drainage pump is low, for instance the drainage pump is stopped when the drainage pump is snoring. The drainage pump is snoring when a mixture of air and water is sucked into the drainage pump. When the drainage pump is stopped all liquid that is present in the outlet conduit (for instance 100-200 liters) will rush back to the basin through the outlet conduit and through the drainage pump. Due to the high content of sand also a considerable amount of sand will rush back (for instance 10-20 liters). The drainage pump is stopped to decrease the use of energy when the drainage pump is not able to lift any liquid, i.e. snoring. However, a great disadvantage is that both the water and sand has to be pumped several times also resulting in increased wear on the drainage pump.

Due to the presence of sand in the pumped liquid, a non-return valve cannot be arranged downstream the drainage pump. A non-return valve will stop the water from rushing back towards the drainage pump, however the sand will slide back through the outlet conduit and block/damage the non-return valve since the sand will settle on top of the non-return valve and thereby prevent subsequent opening. A sediment trap in a pump conduit is disclosed in US 2016/0288021.This arrangement is structurally different in that the trap as such is not closed and integral part of the conduit, but open to the atmosphere at the top. Sediment is released at the bottom.

### Object of the Invention

The present invention aims at obviating the aforementioned disadvantages and failings of previously known drainage pumps assemblies, and at providing an improved drainage pump assembly. A primary object of the present invention is to provide an improved drainage pump assembly of the initially defined type that allows the drainage pump to be stopped without having to pump the liquid comprising solid matter several times. It is another object of the present invention to provide a drainage pump assembly that allows the drainage pump to be stopped without running the risk of being blocked by the solid matter comprised in the pumped liquid.

### Summary of the Invention

According to the invention at least the primary object is attained by means of the initially defined drainage pump assembly having the features defined in the independent claim. Preferred embodiments of the present invention are further defined in the dependent claims.

According to the present invention, there is provided a drainage pump assembly of the initially defined type, which is characterized in that the outlet conduit comprises a sedimentation trap having an inlet opening, an outlet opening and a belly located between said inlet opening and said outlet opening, and comprises a first conduit extending between the pump chamber of the pump and the belly of the sedimentation trap, wherein said first conduit comprises a non-return valve and wherein the outlet opening of the sedimentation trap is configured to be connected to a second conduit.

Thus, the present invention is based on the insight of having a sedimentation trap configured to house all solid matter sliding back towards the drainage pump when the non-return valve is closed, for instance when the drainage pump is stopped/deactivated, and thereby protecting the non-return valve located between the drainage pump and the sedimentation trap.

In a preferred embodiment of the present invention, the belly of the sedimentation trap has a belly volume V [dm³] that is equal to a factor X [dm] times the cross sectional area A [dm²] of the outlet opening of the sedimentation trap, wherein the factor X is equal to or greater than 2, and equal to or less than 12. This means that the sedimentation trap is big enough to receive the solid matter sliding backwards in the outlet conduit, and at the same time small enough not to loose to much pressure (pump head) when the drainage pump is active and the pumped liquid enters the sedimentation trap.

According to a preferred embodiment, a centre axis of the inlet opening of the sedimentation trap has a negative slope. Thereby the solid matter is prevented from sliding backwards from the sedimentation trap towards the drainage pump, even though the drainage pump should be located at a lower level than the sedimentation trap.

According to a preferred embodiment the non-return valve is constituted by a flap valve, and preferably the valve member of the non-return valve is biased towards an open position. Thereby, the non-return valve has minimal or no negative effect on the pumped liquid flow when the drainage pump is active and pumps liquid through the sedimentation trap.

Further advantages with and features of the invention will be apparent from the other dependent claims as well as from the following detailed description of preferred embodiments.

### Brief description of the drawings

A more complete understanding of the abovementioned and other features and advantages of the present invention will be apparent from the following detailed description of preferred embodiments in conjunction with the appended drawings, wherein:
- Fig. 1: is a schematic illustration of an inventive drainage pump assembly located in a mine,
- Fig. 2: is a schematic perspective view from above of a sedimentation trap according to a first embodiment,
- Fig. 3: is a schematic perspective cross sectional view of the sedimentation trap according to figure 2,
- Fig. 4: is a schematic perspective view of a non-return valve used in the sedimentation trap according to figure 2,
- Fig. 5: is a schematic perspective view from above of a sedimentation trap according to a second embodiment,
- Fig. 6: is a schematic cross sectional view of the sedimentation trap according to figure 5,
- Fig. 7: is a schematic perspective view from above of a sedimentation trap according to a third embodiment, and
- Fig. 8: is a schematic perspective cross sectional view of the sedimentation trap according to figure 7.

### Detailed description of preferred embodiments of the invention

The present invention relates specifically to the field of drainage pump assemblies especially configured for pumping liquid comprising solid matter, such as sand and stone material.

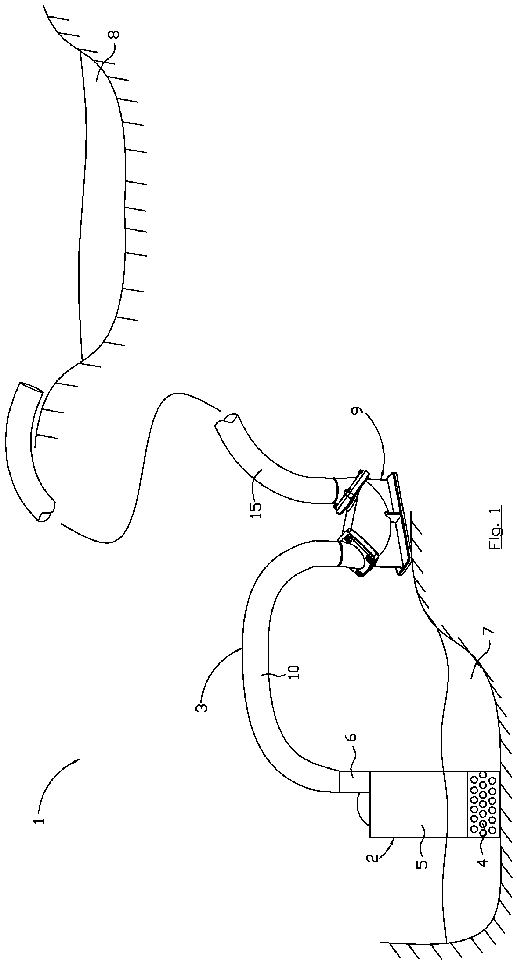

Reference is initially made to figure 1, disclosing a preferred embodiment of a drainage pump assembly, generally designated 1. The drainage pump assembly 1 comprises a drainage pump 2 and an outlet conduit, generally designated 3.

The disclosed drainage pump 2 comprises an inlet 4, a pump housing 5 and a pump outlet 6. Thereto, the drainage pump 2 comprises in a conventional way a hydraulic unit having a pump chamber (not disclosed), and comprises a drive unit (not disclosed). The drive unit and the pump chamber are arranged in the pump housing 5. The drive unit comprises an electrical motor arranged in the liquid tight pump housing 5, and a drive shaft extending from the electrical motor. An impeller (not disclosed) is arranged in the pump chamber and is driven in rotation by the drive shaft during operation of the drainage pump 2, wherein liquid is sucked into said inlet 4 and pumped out of said outlet 6 when the drainage pump 2 is active. The pump housing 5 and the impeller, and other essential components, are preferably made of metal. The electrical motor is powered via an electrical cable extending from a power supply, and the drainage pump 2 comprises a liquid tight lead-through receiving the electrical cable. According to an alternative embodiment, the drive unit comprises an internal combustion engine and a suitable gear box arrangement, wherein the drive shaft is driven in rotation by the internal combustion engine via said gear box arrangement. Drainage pump arrangements comprising internal combustion engines are conventionally used in dry installations, i.e. the entire pump is then located above the liquid surface and an inlet pipe extend from the pump inlet into the liquid.

The drainage pump 2 may also comprise a control unit, such as an Intelligent Drive or Variable Frequency Drive (VFD), located inside the liquid tight pump housing 4. The control unit is configured to control the operational speed of the drainage pump 2. The components of the drainage pump 2 are usually cold down by means of the liquid surrounding the drainage pump 2. The drainage pump 2 is designed and configured to be able to operate in a submerged configuration/position, i.e. during operation be located entirely under the liquid surface. However, it shall be realized that the submersible drainage pump 2 during operation must not be entirely located under the liquid surface but may continuously or occasionally be partly located above the liquid surface.

The drainage pump 2 is in the disclosed application located in a first/lower basin 7 and is intended to transport/pump liquid comprising solid matter from said first/lower basin 7 to a second/higher basin 8. Thereto, it shall be realized that it is conceivable that another drainage pump is located in the second basin 8 and intended to transport the liquid from the second basin 8 to a third basin, etc. The basins may be natural recesses/cavities/pits or prepared recesses/cavities/pits.

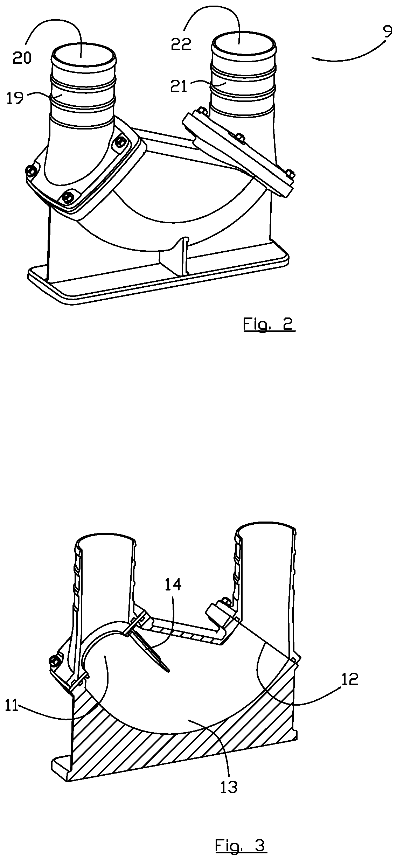

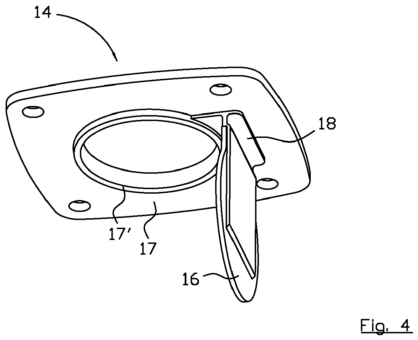

Reference is now also made to figures 2-4 in order to disclose the essential features of the invention, wherein figures 2-4 disclose a first embodiment of a sedimentation trap. The outlet conduit 3 comprises a sedimentation trap, generally designated 9, and a first conduit 10. The sedimentation trap 9 has an inlet opening 11, an outlet opening 12 and a belly 13 located between said inlet opening 11 and said outlet opening 12. The first conduit 10 extends between the pump chamber of the drainage pump 2 and the belly 13 of the sedimentation trap 9. Thereto, said first conduit 10 comprises a non-return valve, generally designated 14.

The belly 13 is a structural formation arranged in such a way that liquid will become stagnant in the belly 13 and solid matter will settle in the belly 13 when the drainage pump 2 is not pumping liquid and the non-return valve 14 is closed. Thus, the belly 13 bulges in relation to the inlet opening 11 and the outlet opening 12. The belly 13 may also be denominated a sump, an interior cavity, a sink, a reservoir, i.e. a structural formation that is used to temporarily store/accumulate solid matter. The outlet opening 12 of the sedimentation trap 9 is configured to be connected to a second conduit 15, wherein the second conduit 15 is configured to transport the pumped liquid to said second basin 8. The non-return valve 14 is preferably arranged at the inlet opening 11 of the sedimentation trap 9. Another feasible location of the non-return valve is at the outlet opening 6 of the drainage pump 2.

In the disclosed embodiment, the non-return valve 14 is constituted by a flap valve and is connected to the inlet opening 11 of the sedimentation trap 9, wherein a valve disc 16 of the flap valve is located in or facing the belly 13 and a valve seat 17 of the flap valve is facing the belly 13. The valve seat 17 comprises a rim 17' arranged to engage the valve disc 16 when the non-return valve is closed. The valve disc 16 and the valve seat 17 are preferably made of metal. The valve disc 16 is connected to the valve seat 17 via a hinge member 18. The hinge member 18 is preferably made of rubber, preferably vulcanized to the valve disc 16 and valve seat 17, respectively. It is also feasible to use an adhesive to attach the hinge member 18 to the valve disc 16 and valve seat 17, respectively. The valve disc 16 (or valve member) is preferably biased towards an open position. When the pump is deactivated the liquid in the outlet conduit will force the non-return valve 14 to close.

Preferably a centre axis of the inlet opening 11 of the sedimentation trap 9 has a negative slope. Said centre axis extends perpendicular to the cross section area of the inlet opening 11. The term negative slope is defined in view of the flow direction of the pumped liquid when the drainage pump2 is active. Preferably a centre axis of the outlet opening 12 of the sedimentation trap 9 has a positive slope. Said centre axis extends perpendicular to the cross section area of the outlet opening 12. The term positive slope is defined in view of the flow direction of the pumped liquid when the drainage pump2 is active. The diameter of the cross section area of the outlet opening 12 is preferably in the range 75-125 millimeters, however both smaller and larger diameters are conceivable.

According to the disclosed embodiment, an inlet pipe fitting 19 is connected to the inlet opening 11 of the sedimentation trap 9. The inlet pipe fitting 19 comprises an inlet opening 20, wherein a centre axis of the inlet opening 20 of the inlet pipe fitting 19 preferably extends in the vertical direction. Thereto, an outlet pipe fitting 21 is connected to the outlet opening 12 of the sedimentation trap 9. The outlet pipe fitting 21comprises an outlet opening 22, wherein a centre axis of the outlet opening 22 of the outlet pipe fitting 21 extends in the vertical direction. The term vertical is defined having the sedimentation trap 9 standing in an operational position on a horizontal surface. According to an alternative embodiment, the centre axis of the inlet opening 20 of the inlet pipe fitting 19 is essentially parallel to the centre axis of the inlet opening 11 of the sedimentation trap 9. According to an alternative embodiment, the centre axis of the outlet opening 22 of the outlet pipe fitting 21 is essentially parallel to the centre axis of the outlet opening 12 of the sedimentation trap 9. Thus, the sedimentation trap 9 according to the first embodiment is generally U-shaped.

The belly 13 of the sedimentation trap 9 has a belly volume V [decimeter³] that is equal to a factor X [decimeter] times the cross sectional area A [decimeter²] of the outlet opening 12 of the sedimentation trap 9, wherein the factor X is equal to or greater than 2, and wherein the factor X is equal to or less than 12. Preferably, the factor X is equal to or greater than 5, and equal to or less than 9. The belly volume V has to be large enough to be able to receive the solid matter sliding backwards into the sedimentation trap 9 when the non-return valve 14 is closed and small enough not to generate a huge pressure drop of the pumped liquid when the drainage pump 2 is active and the pumped liquid enters the sedimentation trap 9. The belly volume V is equal to a maximum liquid volume that the sedimentation trap 9 is configured to hold/keep when a detached sedimentation trap 9 is standing in an operational position on a horizontal surface.

During operation of the drainage pump 2, i.e. when the drainage pump 2 is active and transport liquid, the sedimentation trap 9 is configured in such a way that the pumped liquid shall fluidize the solid matter that has settled in the belly during the drainage pump 2 deactivation time or the time the non-return valve 14 as been closed. Thus, the pumped liquid flow shall be directed towards the location of the belly where the solid matter is intended to settle.

It shall be pointed out that the drainage pump 2 must not be completely deactivated for the non-return valve 14 to close the outlet conduit 3. The drainage pump 2 can be operated by means of a of the control unit. The control unit may be built-in into the drainage pump 2, i.e. preferably located into the pump top, or the drainage pump 2 may be operatively connected to an external control unit. In an operational mode wherein the operational speed of the drainage pump 2 is below the operational speed required to transport liquid through the outlet conduit 3, the non-return valve 3 will close due to the flow resistance from the liquid that is present in the outlet conduit 3.

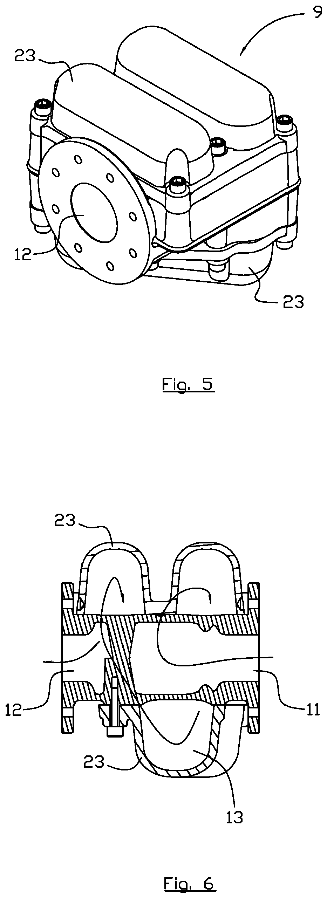

Reference is now made to figures 5 and 6, disclosing a second embodiment of the sedimentation trap 9, and only differences in view of the first embodiment will be discussed. The corresponding elements/components have been given the same reference number throughout the specification.

In the second embodiment of the sedimentation trap 9, the sedimentation trap 9 is arranged/designed as a maze. In the disclosed embodiment, a centre axis of the inlet opening 11 and a centre axis of the outlet opening 12 are essentially parallel and preferably aligned with each other. The sedimentation trap 9 comprises at least two lobes/windings 23 providing a generally helical shaped flow path from the inlet opening 11 to the outlet opening 12, wherein the helical shaped flow path comprises at least one full turn. In the disclosed embodiment the sedimentation trap 9 comprises three lobes 23. The advantage of having a helical shaped flow path is that the orientation of the sedimentation trap 9 does not have negative effect on the function of the sedimentation trap 9. The belly 13 will be arranged in at least one of the lobes 23.

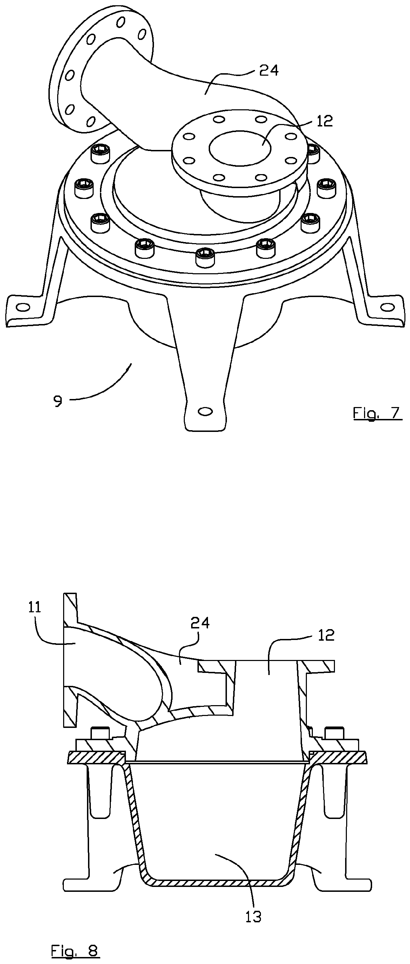

Reference is now made to figures 7 and 8, disclosing a third embodiment of the sedimentation trap 9, and only differences in view of the first embodiment will be discussed. The corresponding elements/components have been given the same reference number throughout the specification.

In the third embodiment of the sedimentation trap 9, the sedimentation trap 9 is arranged/designed as a cyclone. In the disclosed embodiment the sedimentation trap 9 comprises an inlet pipe 24 extending from the inlet opening 11 to the belly 13. The inlet pipe 24 is arranged above the belly 13, and the inlet pipe 24 is configured to create a swirling liquid flow in the belly 13. Thereto, a centre axis of the outlet opening 12 is arranged essentially vertical, and the outlet opening 12 is arranged at the top of the sedimentation trap 9. Thus, the disclosed embodiment provides a generally cyclone shaped liquid flow, entering the belly 13 in a tangential direction and leaving the belly 13 in an axial direction at the top of the sedimentation trap 9.

### Feasible modifications of the Invention

The invention is not limited only to the embodiments described above and shown in the drawings, which primarily have an illustrative and exemplifying purpose. This patent application is intended to cover all adjustments and variants of the preferred embodiments described herein, thus the present invention is defined by the wording of the appended claims and thus, the equipment may be modified in all kinds of ways within the scope of the appended claims.

It shall also be pointed out that all information about/concerning terms such as above, under, upper, lower, etc., shall be interpreted/read having the equipment oriented according to the figures, having the drawings oriented such that the references can be properly read. Thus, such terms only indicates mutual relations in the shown embodiments, which relations may be changed if the inventive equipment is provided with another structure/design.

It shall also be pointed out that even thus it is not explicitly stated that features from a specific embodiment may be combined with features from another embodiment, the combination shall be considered obvious, if the combination is possible.

Throughout this specification and the claims which follows, unless the context requires otherwise, the word "comprise", and variations such as "comprises" or "comprising", will be understood to imply the inclusion of a stated integer or steps or group of integers or steps but not the exclusion of any other integer or step or group of integers or steps.

## Claims

1. A drainage pump assembly comprising a drainage pump (2) and an outlet conduit (3) connected to said drainage pump (2), the drainage pump (2) comprising a pump chamber and being configured to pump liquid comprising solid matter, wherein the outlet conduit (3) comprises:
- a sedimentation trap (9) having an inlet opening (11), an outlet opening (12) and a belly (13) located between said inlet opening (11) and said outlet opening (12), wherein the belly (13) is closed to the outside of the sedimentation trap (9) except via said inlet opening (11) and said outlet opening (12), and
- a first conduit (10) extending between the pump chamber of the drainage pump (2) and the belly (13) of the sedimentation trap (9),
wherein said first conduit (10) comprises a non-return valve (14), and wherein the outlet opening (12) of the sedimentation trap (9) is configured to be connected to a second conduit (15).

2. The drainage pump assembly according to claim 1, wherein the outlet conduit (3) comprises a second conduit (15) connected to the outlet opening (12) of the sedimentation trap (9).

3. The drainage pump assembly according to claim 1 or 2, wherein the belly (13) of the sedimentation trap (9) has a belly volume V [dm³] that is equal to a factor X [dm] times the cross sectional area A [dm²] of the outlet opening (12) of the sedimentation trap (9), wherein the factor X is equal to or greater than 2.

4. The drainage pump assembly according to any of claims 1-3, wherein the belly (13) of the sedimentation trap (9) has a belly volume V [dm³] that is equal to a factor X [dm] times the cross sectional area A [dm²] of the outlet opening (12) of the sedimentation trap (9), wherein the factor X is equal to or less than 12.

5. The drainage pump assembly according to any preceding claim, wherein a centre axis of the inlet opening (11) of the sedimentation trap (9) has a negative slope.

6. The drainage pump assembly according to any preceding claim, wherein a centre axis of the outlet opening (12) of the sedimentation trap (9) has a positive slope.

7. The drainage pump assembly according to any preceding claim, wherein an inlet pipe fitting (19) is connected to the inlet opening (11) of the sedimentation trap (9).

8. The drainage pump assembly according to claim 7, wherein the inlet pipe fitting (19) comprises an inlet opening (20), wherein a centre axis of the inlet opening (20) of the inlet pipe fitting (19) extends in the vertical direction.

9. The drainage pump assembly according to any preceding claim, wherein an outlet pipe fitting (21) is connected to the outlet opening (12) of the sedimentation trap (9).

10. The drainage pump assembly according to claim 9, wherein the outlet pipe fitting (21) comprises an outlet opening (22), wherein a centre axis of the outlet opening (22) of the outlet pipe fitting (21) extends in the vertical direction.

11. The drainage pump assembly according to any preceding claim, wherein the non-return valve (14) is connected to the inlet opening (11) of the sedimentation trap (9).

12. The drainage pump assembly according to claim 11, wherein the non-return valve (14) is constituted by a flap valve.

13. The drainage pump assembly according to claim 11 or 12, wherein a valve member (16) of the non-return valve (14) is biased towards an open position.

## Patentansprüche

1. Drainagepumpenvorrichtung, die eine Drainagepumpe (2) und eine mit der Drainagepumpe (2) verbundene Auslassleitung (3) aufweist, wobei die Drainagepumpe (2) eine Pumpenkammer aufweist und konfiguriert ist, feststoffhaltige Flüssigkeit zu pumpen, wobei die Auslassleitung (3) aufweist:
- eine Sedimentationsfalle (9) mit einer Einlassöffnung (11), einer Auslassöffnung (12) und einem zwischen der Einlassöffnung (11) und der Auslassöffnung (12) angeordneten Bauch (13), wobei der Bauch (13) zur äußeren Umgebung der Sedimentationsfalle (9) hin geschlossen ist, ausgenommen über die Einlassöffnung (11) und die Auslassöffnung (12), und
- eine erste Leitung (10), die sich zwischen der Pumpenkammer der Drainagepumpe (2) und dem Bauch (13) der Sedimentationsfalle (9) erstreckt,
wobei die erste Leitung (10) ein Rückschlagventil (14) aufweist, und wobei die Auslassöffnung (12) der Sedimentationsfalle (9) konfiguriert ist, mit einer zweiten Leitung (15) verbunden zu werden.

2. Drainagepumpenvorrichtung nach Anspruch 1, wobei die Auslassleitung (3) eine mit der Auslassöffnung (12) der Sedimentationsfalle (9) verbundene zweite Leitung (15) aufweist.

3. Drainagepumpenvorrichtung nach Anspruch 1 oder 2, wobei der Bauch (13) der Sedimentationsfalle (9) ein Bauchvolumen V [dm³] hat, das gleich einem Faktor X [dm] mal der Querschnittfläche A [dm²] der Auslassöffnung (12) der Sedimentationsfalle (9) ist, wobei der Faktor X gleich oder größer als 2 ist.

4. Drainagepumpenvorrichtung nach einem der Ansprüche 1 bis 3, wobei der Bauch (13) der Sedimentationsfalle (9) ein Bauchvolumen V [dm³] hat, das gleich einem Faktor X [dm] mal der Querschnittfläche A [dm²] der Auslassöffnung (12) der Sedimentationsfalle (9) ist, wobei der Faktor X gleich oder kleiner als 12 ist.

5. Drainagepumpenvorrichtung nach einem der vorstehenden Ansprüche, wobei eine Zentralachse der Einlassöffnung (11) der Sedimentationsfalle (9) eine negative Schräge hat.

6. Drainagepumpenvorrichtung nach einem der vorstehenden Ansprüche, wobei eine Zentralachse der Auslassöffnung (12) der Sedimentationsfalle (9) eine positive Schräge hat.

7. Drainagepumpenvorrichtung nach einem der vorstehenden Ansprüche, wobei ein Einlassrohr-Anschlussstück (19) mit der Einlassöffnung (11) der Sedimentationsfalle (9) verbunden ist.

8. Drainagepumpenvorrichtung nach Anspruch 7, wobei das Einlassrohr-Anschlussstück (19) eine Einlassöffnung (20) aufweist, wobei eine Zentralachse der Einlassöffnung (20) des Einlassrohr-Anschlussstücks (19) sich in die vertikale Richtung erstreckt.

9. Drainagepumpenvorrichtung nach einem der vorstehenden Ansprüche, wobei ein Auslassrohr-Anschlussstück (21) mit der Auslassöffnung (12) der Sedimentationsfalle (9) verbunden ist.

10. Drainagepumpenvorrichtung nach Anspruch 9, wobei das Auslassrohr-Anschlussstück (21) eine Auslassöffnung (22) aufweist, wobei eine Zentralachse der Auslassöffnung (22) des Auslassrohr-Anschlussstücks (21) sich in vertikaler Richtung erstreckt.

11. Drainagepumpenvorrichtung nach einem der vorstehenden Ansprüche, wobei das Rückschlagventil (14) mit der Einlassöffnung (11) der Sedimentationsfalle (9) verbunden ist.

12. Drainagepumpenvorrichtung nach Anspruch 11, wobei das Rückschlagventil (14) aus einem Klappenventil besteht.

13. Drainagepumpenvorrichtung nach Anspruch 11 oder 12, wobei ein Ventilelement (16) des Rückschlagventils (14) zu einer offenen Position hin vorgespannt ist.

## Revendications

1. Ensemble de pompe de drainage comprenant une pompe de drainage (2) et un conduit de sortie (3) raccordé à ladite pompe de drainage (2), la pompe de drainage (2) comprenant une chambre de pompe et étant configurée pour pomper du liquide comprenant une matière solide, dans lequel :
le conduit de sortie (3) comprend :
un piège à sédimentation (9) ayant une ouverture d'entrée (11), une ouverture de sortie (12) et un ventre (13) positionné entre ladite ouverture d'entrée (11) et ladite ouverture de sortie (12), dans lequel le ventre (13) est fermé par rapport à l'extérieur du piège à sédimentation (9), excepté via ladite ouverture d'entrée (11) et ladite ouverture de sortie (12), et
un premier conduit (10) s'étendant entre la chambre de pompe de la pompe de drainage (2) et le ventre (13) du piège à sédimentation (9),
dans lequel ledit premier conduit (10) comprend une vanne de non-retour (14), et dans lequel l'ouverture de sortie (12) du piège à sédimentation (9) est configurée pour être raccordée à un second conduit (15).

2. Ensemble de pompe de drainage selon la revendication 1, dans lequel le conduit de sortie (3) comprend un second conduit (15) raccordé à l'ouverture de sortie (12) du piège à sédimentation (9).

3. Ensemble de pompe de drainage selon la revendication 1 ou 2, dans lequel le ventre (13) du piège à sédimentation (9) a un volume de ventre V [dm³] qui est égal à un facteur X [dm] fois la surface de section transversale A [dm²] de l'ouverture de sortie (12) du piège à sédimentation (9), dans lequel le facteur X est égal ou supérieur à 2.

4. Ensemble de pompe de drainage selon l'une quelconque des revendications 1 à 3, dans lequel le ventre (13) du piège à sédimentation (1) a un volume de ventre V [dm³] qui est égal à un facteur X [dm] fois la surface de section transversale A [dm²] de l'ouverture de sortie (12) du piège à sédimentation (9), dans lequel le facteur X est égal ou inférieur à 12.

5. Ensemble de pompe de drainage selon l'une quelconque des revendications précédentes, dans lequel un axe central de l'ouverture d'entrée (11) du piège à sédimentation (9) a une inclination négative.

6. Ensemble de pompe de drainage selon l'une quelconque des revendications précédentes, dans lequel un axe central de l'ouverture de sortie (12) du piège à sédimentation (9) a une inclinaison positive.

7. Ensemble de pompe de drainage selon l'une quelconque des revendications précédentes, dans lequel un raccord de tuyau d'entrée (19) est raccordé à l'ouverture d'entrée (11) du piège à sédimentation (9).

8. Ensemble de pompe de drainage selon la revendication 7, dans lequel le raccord de tuyau d'entrée (19) comprend une ouverture d'entrée (20), dans lequel un axe central de l'ouverture d'entrée (20) du raccord du tuyau d'entrée (19) s'étend dans la direction verticale.

9. Ensemble de pompe de drainage selon l'une quelconque des revendications précédentes, dans lequel le raccord de tuyau de sortie (21) est raccordé à l'ouverture de sortie (12) du piège à sédimentation (9).

10. Ensemble de pompe de drainage selon la revendication 9, dans lequel le raccord de tuyau de sortie (21) comprend une ouverture de sortie (22), dans lequel un axe central de l'ouverture de sortie (22) du raccord du tuyau de sortie (21) s'étend dans la direction verticale.

11. Ensemble de pompe de drainage selon l'une quelconque des revendications précédentes, dans lequel la vanne de non-retour (14) est raccordée à l'ouverture d'entrée (11) du piège à sédimentation (9).

12. Ensemble de pompe de drainage selon la revendication 11, dans lequel la vanne de non-retour (14) est constituée par une vanne à clapet.

13. Ensemble de pompe de drainage selon la revendication 11 ou 12, dans lequel un élément de vanne (16) de la vanne de non-retour (14) est sollicité vers une position ouverte.
